# EUROPÄISCHE PATENTSCHRIFT

(11) **EP 3 831 180 B1**
(45) Veröffentlichungstag und Bekanntmachung des Hinweises auf die Patenterteilung: **15.11.2023**
(21) Anmeldenummer: 20209933.9
(22) Anmeldetag: 25.11.2020
(51) Int. Cl.: A01C 7/08, A01C 7/20, A01B 73/04

(54) **LANDWIRTSCHAFTLICHE AUSBRINGMASCHINE**
AGRICULTURAL APPLICATION MACHINE
MACHINE D'ÉPANDAGE AGRICOLE

(30) Priorität: 06.12.2019 DE 102019133273
(43) Veröffentlichungstag der Anmeldung: 09.06.2021
(73) Patentinhaber: PÖTTINGER Landtechnik GmbH, 4710 Grieskirchen (AT)
(72) Erfinder: Kraus, Hans-Georg, 4710 Grieskirchen (AT); Dönicke, Gerhard, 4710 Grieskirchen (AT)
(74) Vertreter: Thoma, Michael

(56) Entgegenhaltungen:
- EP-A1- 1 029 432
- EP-A2- 0 677 236
- EP-A2- 0 958 725

## Beschreibung

Die vorliegende Erfindung betrifft eine landwirtschaftliche Ausbringmaschine mit einem Tank zum Speichern körnigen Guts wie Saatgut oder Dünger, sowie einer Verteileinheit, die über eine Zuführleitung mit dem Tank verbunden sowie über Ausbringleitungen mit mehreren Ausbringelementen verbunden ist, wobei die Verteileinheit durch eine Lenkeranordnung an klappbaren Maschinenflügeln, die zwischen einer abgesenkten Arbeitsstellung und einer ausgehobenen Vorgewende- und/oder Transportstellung klappbar gelagert sind, abgestützt ist.

Bei landwirtschaftlichen Ausbringmaschinen wie Sämaschinen bzw. Düngerstreuern wird das Saatgut und/oder der Dünger in einem Tank, der ggf. separate Kammern für Saatgut und Dünger aufweisen kann, gespeichert und über eine Verteileinheit zu den Ausbringelementen gefördert, um in mehreren Reihen nebeneinander ausgebracht zu werden. Die Verteileinheit umfasst dabei üblicherweise einen Verteilerkopf mit einem Steigrohr, das vom Tank her über eine Zuführleitung mit dem zu verteilenden Gut beispielsweise pneumatisch versorgt wird. Das sich in dem Verteilerkopf verteilende Gut wird über eine Vielzahl von Ausbringleitungen, die an dem Verteilerkopf angeschlossen sind und diesen mit den Ausbringelementen verbinden, zu den Ausbringelementen, beispielsweise den Säscharen gefördert.

Um das auszubringende Gut tatsächlich gleichmäßig oder in der gewünschten Weise auf die Ausbringelemente zu verteilen, ist die Verteileinheit insgesamt ein recht komplexes System, bei dem diverse Parameter wie die Länge der Ausbringleitungen und die Lage und Ausrichtung des Verteilerkopfes Einfluss auf die Verteilung nehmen.

Solche Verteileinheiten werden aus verschiedenen Gründen gerne über den Säschienen, an denen die Ausbringelemente angeordnet sind, angeordnet. Einerseits kommt eine solche Anordnung der Verteileinheit der Verteilqualität zugute, da die Länge der Ausbringleitungen nicht unnötig vergrößert wird und ein gewisses Gefälle vorhanden ist. Zum anderen kollidiert der Verteilerkopf nicht mit dem Tank, der aus anderen Gründen wie beispielsweise der Gewichtsverteilung gerne im vorderen Teil der Ausbringmaschine angeordnet wird.

Um die Verteileinheit stabil zu lagern, kann die Verteileinheit durch eine Lenkeranordnung an den Maschinenflügeln abgestützt werden, die in der Arbeitsstellung unterhalb der Verteileinheit liegen und verschiedene Arbeitsaggregate umfassen können. Regelmäßig umfassen die genannten Maschinenflügel ein oder mehrere Bodenbearbeitungsaggregate wie beispielsweise eine Eggeneinheit, insbesondere in Form einer Kreiselegge, eine Walzeneinheit wie beispielsweise eine Packerradwalze und eine Sä- oder Ausbringschiene, an der die Ausbringelemente wie beispielsweise Säschare oder Ablegerohre angebracht sein können. Die genannten Bodenbearbeitungsaggregate können in Fahrtrichtung der Ausbringmaschine hintereinander herlaufend angeordnet sein, wobei üblicherweise die Bodenauflockerungseinheit wie die Kreiselegge der Walzeneinheit vorausläuft und die Säscharen bzw. Ausbringelemente der Walzeneinheit hinterherlaufen können.

Um die Straßentransportbreite einhalten zu können, sind die genannten Maschinenflügel üblicherweise um eine liegende, in Fahrtrichtung weisende Klappachse aus der abgesenkten Arbeitsstellung, in der die Maschinenflügel liegend ausgerichtet sind, in eine ausgehobene Vorgewende- und/oder Transportstellung schwenkbar, in der die Maschinenflügel aufrecht stehend angeordnet sein können.

Um diese Stellbewegungen der Maschinenflügel zwischen abgesenkter Arbeitsstellung und ausgehobener Transportstellung zu gestatten, muss die Lenkeranordnung, durch die die Verteileinheit auf den Maschinenflügeln abgestützt ist, gelenkig an den Maschinenflügeln angelenkt sein, wobei es durch die Bewegung der Maschinenflügel zu Bewegungen der Lenkeranordnung und damit der Verteileinheit kommen kann. Die maschinenflügelseitigen Gelenke der Lenkeranordnung können zwar näherungsweise fluchtend mit den genannten Klappachsen, um die die Maschinenflügel nach oben in die Transportstellung geschwenkt werden können, angeordnet werden, sodass die Schwenkbewegung der Maschinenflügel an sich keine größeren Bewegungen in der Lenkeranordnung induziert. Allerdings sind Ausbringmaschinen bekannt, bei denen die Maschinenflügel in der aufrechten Transportstellung zusätzlich zu der genannten Schwenkbewegung auch noch aufeinander zubewegt werden können, beispielsweise durch ein oder mehrere Zugelemente, die die aufrecht stehenden Maschinenflügel aufeinander zubewegen können. Diese Beweglichkeit in der aufrechten Transportstellung aufeinander zu kann beispielsweise durch die gelenkige Verbindung zwischen zwei Arbeitsaggregatreihen erzielt werden, die in der abgesenkten Arbeitsstellung der Höhenverstellbarkeit der Arbeitsaggregate zueinander dient. Beispielsweise kann zwischen der Packerradwalze und der vorauslaufenden Kreiselegge oder zwischen zwei anderen Arbeitsaggregaten eine Parallelogramm-Lenkerführung oder eine andere Lenkeranordnung vorgesehen sein, die in der abgesenkten, liegenden Arbeitsstellung Höhenbewegungen der beiden Arbeitsaggregate zueinander gestattet. Sind die Maschinenflügel in der aufrechten Transportstellung, kann die genannte Lenkeranordnung dazu genutzt werden, die aufrecht stehenden Maschinenflügel, insbesondere deren in der genannten Weise verstellbaren Teile aufeinander zu und damit noch näher zur Maschinenmitte zu bewegen.

Durch diese zusätzlich Bewegung aufeinander zu kommt es jedoch in jedem Fall zu einer Verstellung der Geometrie bzw. des Abstandes der maschinenflügelseitigen Gelenke der Lenkeranordnung, die die Verteileinheit abstützt, sodass sich in der Folge auch die Verteileinheit in ihrer Position verstellt. Dies kann zu Kollisionsproblemen führen, insbesondere da sich die Maschinenflügel durch die Bewegung aufeinander zu noch näher an die Verteileinheit annähern.

Beispielsweise tritt diese Verstellung der Geometrie der Lenkeranordnung, die die Verteileinheit abstützt, auf, wenn die Lenkeranordnung maschinenflügelseitig an den Säschienenteilen angelenkt ist, die die Ausbringelemente zum Ausbringen des zu verteilenden Guts trägt. Eine solche Anbindung der Verteileinheit an die Säschiene bzw. die Säschienenteile wird jedoch gerne vorgesehen, um die Säschiene von den vorauslaufenden Arbeitsaggregaten wie Packerwalze und Kreiselegge in einfacher Weise entkoppeln bzw. daran ankoppeln zu können, um wahlweise die Bodenbearbeitungsaggregate separat oder in Kombination miteinander nutzen zu können. Da die Verteileinheit für den Soloeinsatz der Kreiseleggen-Packerwalzen-Kombination nicht benötigt wird, müsste die Verteileinheit separat von der Kreiseleggen-Packerwalzen-Kombination gelöst werden, da die Verteileinheit durch die Vielzahl an Ausbringleitungen mit den an der Säschiene vorgesehenen Ausbringelementen verbunden ist. Insofern ist es deutlich günstiger, die Verteileinheit an der Säschiene bzw. den klappbaren Säschienenteilen anzukoppeln, was jedoch die genannte Problematik der Geometrieverstellung der Lenkeranordnung mit sich bringt.

Landwirtschaftliche Ausbringmaschinen der genannten Art zeigen beispielsweise die Druckschriften DE 10 2014 016 213 A1, EP 25 14 292 A1 oder DE 20 2015 000 720 U1. Die genannte Verteileinheit umfassend einen Verteilerkopf ist dabei hinter dem frontseitig montierten Saatgut- und/oder Düngertank über der Säschiene bzw. den Ausbringelementen montiert.

Um die Verteileinheit auf den Säschienenteilen abzustützen, andererseits aber die genannten Stellbewegungen der Säschienenteile bzw. der damit verbundenen Maschinenflügelteile in die Transportstellung zu ermöglichen, wurde bereits vorgeschlagen, die Verteileinheit an einem Lenker zu befestigen, der gelenkig an einem der Säschienenteile befestigt ist und durch einen anderen Lenker abgestützt wird, der einerseits gelenkig mit dem ersten Lenker verbunden und andererseits gelenkig an dem anderen Säschienenteil abgestützt ist. Dabei kann es jedoch zu Kollisionsproblemen zwischen der Verteileinheit und den Maschinenflügeln in der Transportstellung kommen.

Aus der EP 0 958 725 A2 ist eine Sämaschine bekannt, deren Verteileinheit durch zwei Lenker an den klappbaren Seitenflügeln abgestützt ist, wobei die beiden Lenker einen Zweischlag bilden, der sich an den beiden Seitenflügeln jeweils gelenkig abstützt. Eine der beiden Zweischlagstreben erstreckt sich dabei mit einem gekröpften Abschnitt über das Verbindungsgelenk der beiden Streben hinaus, wobei das Steigrohr der Verteileinheit an dem gekröpften Verlängerungsabschnitt befestigt ist.

Der vorliegenden Erfindung liegt daher die Aufgabe zugrunde, eine verbesserte landwirtschaftliche Ausbringmaschine der genannten Art zu schaffen, die Nachteile des Standes der Technik vermeidet und letzteren in vorteilhafter Weise weiterbildet. Insbesondere soll eine verbesserte Abstützung der Verteileinheit geschaffen werden, die das Zusammenschieben der Maschinenflügel in der aufrechten Transportstellung ermöglicht, ohne Kollisionsprobleme mit sich zu bringen.

Erfindungsgemäß wird die genannte Aufgabe durch eine landwirtschaftliche Ausbringmaschine gemäß Anspruch 1 gelöst. Bevorzugte Ausgestaltungen der Erfindung sind Gegenstand der abhängigen Ansprüche.

Es wird also vorgeschlagen, eine Verstellung der Geometrie der Gelenkpunkte der Lenkeranordnung zuzulassen, um für das Anfahren der Transportstellung der Maschinenflügel eine ausreichend große Freiheit zu haben, dabei jedoch die Verteileinheit aufrecht in der Mitte zwischen den Maschinenflügeln zu halten, um Kollisionen durch ein ungewolltes Verkippen der Verteileinheit zu vermeiden. Erfindungsgemäß ist die Verteileinheit durch eine Linearführung beim Verstellen der Maschinenflügel zwischen den Arbeits- und Transportstellungen geführt und sowohl in der Arbeits- als auch in der Transportstellung aufrecht und mittig zwischen den Maschinenflügeln gehalten. Auch wenn sich die Lenkeranordnung beim Verbringen der Maschinenflügel, an denen die Lenkeranordnung gelenkig abgestützt ist, in der Geometrie verstellt, kann durch die genannte Linearführung ein Verkippen der Verteileinheit zur rechten oder linken Maschinenseite hin, das eine Kollision mit den in der Transportstellung aufrechten Maschinenflügeln zur Folge haben könnte, vermieden werden. Gleichzeitig kann die Verteileinheit auch als Montageplattform für andere Bauteile wie beispielsweise eine Straßenbeleuchtung oder eine Warntafel genutzt werden, die in der Transportstellung eine bestimmte, insbesondere vertikale oder horizontale Ausrichtung benötigen.

Insbesondere kann die Verteileinheit durch die Linearführung höhenverstellbar gelagert sein, so dass die Verteileinheit in aufrechter Richtung gegenüber dem zentralen Maschinenrahmen und/oder gegenüber den seitlichen Maschinenflügeln verfahren werden kann. Die Höhenbewegung kann dabei durch die Verstellung der Lenker beim Ein- bzw. Zusammenklappen der Seitenflügel oder Anpassbewegungen der Seitenflügel im Betrieb induziert bzw. ausgelöst werden. Unabhängig hiervon kann die Linearführung die Verteileinheit beim Verfahren in eine andere Höhe in ihrer aufrechten Ausrichtung halten.

Erfindungsgemäß umfasst die genannte Lenkeranordnung zwei Lenker, die jeweils einerseits gelenkig an der Verteileinheit und andererseits gelenkig an einem der Maschinenflügel angelenkt sind. Um trotz der nur gelenkigen Verbindung der Verteileinheit mit beiden Lenkern die Verteileinheit stabil zu halten, wird die genannte Verteileinheit durch die Linearführung geführt. Durch die Gelenke an beiden Enden der beiden Lenker werden die Maschinenflügel nicht an der gewünschten Stellbewegung in die Transportstellung beeinträchtigt, gleichzeitig wird jedoch durch die Linearführung die Verteileinheit sowohl in der Arbeitsstellung als auch in der Vorgewende- und/oder Transportstellung aufrecht und mittig zwischen den Maschinenflügeln gehalten.

Die genannten Gelenke der Lenker, mit denen diese einerseits jeweils an einem Maschinenflügel angelenkt sind und andererseits an der Verteileinheit bzw. der Verteileinheit und aneinander angelenkt sind, können jeweils zumindest einachsig gelenkig mit einer Gelenkachse näherungsweise parallel zu den Klappachsen der Maschinenflügel, vorteilhafterweise aber mehrachsig gelenkig ausgebildet sein, beispielsweise in Form von Kugelgelenken, um mehrachsige Gelenkbewegungen zuzulassen.

Um ein An- und Abkoppeln der Verteileinheit zusammen mit den Ausbringelementen von einem restlichen Maschinenteil zu vereinfachen, kann die genannte Lenkeranordnung in vorteilhafter Weiterbildung der Erfindung an Säschienenteilen angelenkt sein, die jeweils mehrere Ausbringelemente tragen und jeweils einen Teil eines Maschinenflügels bilden und/oder zusammen mit einem jeweiligen Maschinenflügel zwischen der abgesenkten Transportstellung und der ausgehobenen Vorgewende- und/oder Transportstellung schwenkbar gelagert ist. Hierdurch braucht nicht die Verteileinheit separat demontiert werden, wenn die Säschiene bzw. die Ausbringelemente abgekoppelt werden, um den restlichen Maschinenteil, beispielsweise Bodenbearbeitungsaggregate wie eine Eggeneinheit und/oder eine Walzeneinheit separat zu nutzen. Gleichzeitig kann die Abstützung der Verteileinheit über die genannten Lenker an den Säschienenteilen eine zentrale Position der Verteileinheit über den Ausbringelementen ermöglichen, was der Verteilqualität zugutekommt.

Die Lenker der Lenkeranordnung können in vorteilhafter Weiterbildung der Erfindung bezüglich einer vertikalen Längsmittelebene, die sich mittig zwischen den beiden Maschinenflügeln erstreckt und/oder eine Deichsel enthält und/oder zentral durch die Anbauvorrichtung der Ausbringmaschine geht, symmetrisch angeordnet sein und zumindest in einer der Transport- und Arbeitsstellungen eine zueinander spitzwinklig geneigte Lenkerstellung einnehmen. Die genannten Lenker können in Weiterbildung der Erfindung gleich lang sein und bezüglich der genannten Längsmittelebene symmetrisch verteilt angeordnete Gelenkpunkte besitzen, mit denen die genannten Lenker an den Maschinenflügeln einerseits und an der Verteileinheit andererseits angelenkt sein können.

In Weiterbildung der Erfindung können die genannten Lenker an Maschinenflügelabschnitten angelenkt sein, die in ihrer aufrechten Transportstellung aufeinander zu und voneinander wegbewegt werden können. Eine solche Annäherungsbewegung der aufrechten Maschinenflügel kann eine zumindest näherungsweise lineare Bewegung quer zur Fahrtrichtung in liegender Richtung sein, um die hochgeklappten Maschinenflügel näher aufeinander zu zu bewegen bzw. beim Zurückverfrachten Richtung Arbeitsstellung auseinander zu fahren.

Die genannte Beweglichkeit der Maschinenflügel in der aufrechten Transportstellung aufeinander zu und voneinander weg kann insbesondere durch eine gelenkige Verbindung zwischen Maschinenflügelabschnitten realisiert werden, die in der abgesenkten Arbeitsstellung dazu dient, die genannten Maschinenflügelabschnitte in ihrer Höhenstellung relativ zueinander zu verstellen. Insbesondere kann eine Lenkeranordnung vorzugsweise in Form einer Parallelogramm-Lenkerverbindung zwischen zwei in der Arbeitsstellung hintereinander herlaufenden Maschinenflügelabschnitten vorgesehen sein, die in der Arbeitsstellung der Maschinenflügel liegende, quer zur Fahrtrichtung ausgerichtete Schwenkachsen besitzen kann, um Höhenbewegungen des einen Maschinenflügelteils relativ zum anderen Maschinenflügelteil zuzulassen. Werden die genannten Maschinenflügelteile in die Transportstellung nach oben geklappt, können sich die genannten Schwenkachsen der Lenkeranordnung bzw. Parallelogramm-Lenkerführung näherungsweise vertikal bzw. aufrecht erstrecken, sodass die in der Arbeitsstellung höhenbeweglichen Maschinenflügelteile in der aufrechten Transportstellung aufeinander zu und voneinander wegbewegt werden können.

Um die genannten Maschinenflügelteile in der Transportstellung aufeinander zu und/oder voneinander weg zu bewegen, kann zumindest ein fremdenergiebetätigbarer Stellaktor beispielsweise in Form eines Hydraulikzylinders vorgesehen sein. Alternativ oder zusätzlich kann aber auch ein anderer Zugaktor beispielsweise in Form eines Seilzugs oder eines Kettenzugs vorgesehen sein, um die Maschinenflügelteile in der Transportstellung aufeinander zu zu bewegen.

Die in der aufrechten Transportstellung quer beweglichen bzw. aufeinander zu beweglichen Maschinenflügelteile können in Weiterbildung der Erfindung Sä- bzw. Ausbringschienen umfassen, an denen die Ausbringelemente angeordnet sind, und/oder Walzenelemente beispielsweise in Form von Packerrad-Walzen-Hälften umfassen, die bezüglich einer vorauslaufenden Arbeitsaggregate-Einheit wie beispielsweise einer Kreiselegge verstellbar gelagert sein können.

Durch die Querbewegung bzw. Aufeinanderzubewegung der aufrechten Maschinenflügelteile in der Transportstellung können die Anlenkpunkte der Lenkeranordnung, die die Verteileinheit auf den klappbaren Maschinenflügeln abstützen, einen anderen Abstand bekommen oder sich in anderer Weise in ihrer Geometrie verstellen, was auch dann gelten kann, wenn die Anlenkpunkte der Lenker an den genannten Maschinenflügeln in deren abgesenkten Arbeitsstellung mit den Klappachsen fluchten, um die die Maschinenflügel nach oben schwenkbar sind.

In Weiterbildung der Erfindung können die maschinenflügelseitigen Gelenke der beiden Lenker der Lenkeranordnung in der abgesenkten Arbeitsstellung der Maschinenflügel einen Abstand voneinander besitzen, der beispielsweise mehr als 150% oder mehr als 200% des Abstands betragen kann, den die genannten Gelenke in der ausgehobenen Transportstellung der Maschinenflügel einnehmen.

Eine solche Verkürzung des Abstands der maschinenflügelseitigen Gelenke der Lenker von der abgesenkten Arbeitsstellung in die aufrechte Transportstellung kann beispielsweise aus der zuvor beschriebenen Querbewegung der ausgehobenen Maschinenflügel aufeinander zu resultieren, aber auch daran liegen, dass die maschinenflügelseitigen Gelenke nicht mit den Klappachsen der Maschinenflügel fluchtend angeordnet sind, sondern in der abgesenkten Arbeitsstellung weiter außen, das heißt mit größerem Abstand voneinander angeordnet sind als die Klappachsen.

Alternativ oder zusätzlich können die maschinenflügelseitigen Gelenke der beiden Lenker in der abgesenkten Arbeitsstellung der Maschinenflügel einen Abstand voneinander besitzen, der mehr als 150% oder mehr als 200% des Abstands beträgt, den die beiden anderen Gelenke der Lenker voneinander einnehmen, mit denen die genannten Lenker an der Verteileinheit angelenkt sind. Bei einer solchen Anordnung der Gelenkpunkte erstrecken sich die genannten Lenker in der abgesenkten Arbeitsstellung der Maschinenflügel spitzwinklig zueinander nach Art eines Satteldachs. Hierdurch kann eine stabile Abstützung der Verteileinheit auch gegen Querkräfte erzielt werden.

Die zuvor genannte Linearführung, die die Verteileinheit trotz der Gelenkigkeit der Lenkeranordnung aufrecht in der Mitte zwischen den Maschinenflügeln hält, kann grundsätzlich in verschiedener Weise ausgebildet sein, wobei die genannte Linearführung vorteilhafterweise derart beschaffen ist, dass die Verteileinheit in allen Positionen und/oder für alle Klappstellungen der Maschinenflügel zwischen der abgesenkten Arbeitsstellung und der vollständig nach oben geschwenkten Transportstellung in vertikaler Ausrichtung mittig zu den Maschinenflügeln gehalten ist. Mit anderen Worten ist die Linearführung vorteilhafterweise dazu vorgesehen, die Verteileinheit über den gesamten Verstellweg der Maschinenflügel zumindest näherungsweise exakt mittig vertikal ausgerichtet zu halten. Hierdurch kann die Kollisionsgefahr mit anderen Maschinenteilen minimiert werden.

In vorteilhafter Weiterbildung der Erfindung kann die genannte Linearführung zwei Führungsstangen umfassen, die einerseits gelenkig an den zuvor genannten Lenkern der Lenkeranordnung angelenkt sein und andererseits gelenkig an einem Führungsschlitten angelenkt sein können, der längsverschieblich an der Verteileinheit geführt ist. Werden die genannten Lenker beim Auf- oder Niederklappen der Maschinenflügel aufeinander zu bzw. auseinander geschwenkt, wird diese Schwenkbewegung der Lenker in eine Schwenkbewegung der genannten Führungsstangen umgesetzt, was zu einer Linearbewegung des genannten Führungsschlittens führt. Insbesondere kann die Anordnung der Führungsstangen an den Lenkern derart beschaffen sein, dass bei einem Zusammenschwenken der Lenker auch die Führungsstangen zusammenschwenken und/oder einen kleineren Winkel zwischen sich einschließen und/oder der Führungsschlitten eine Aufwärtsbewegung ausführt, insbesondere entlang einer zumindest näherungsweise vertikalen Verstellbahn.

Der genannte Führungsschlitten kann an der Verteileinheit in einer Führungskulisse oder an einer Führungsschiene oder einer anderen vorzugsweise geradlinig ausgebildeten Führungskontur verschieblich geführt sein, sodass die genannte Bewegung des Führungsschlittens relativ zur Verteileinheit möglich ist, gleichzeitig aber die Verteileinheit in der gewünschten aufrechten, insbesondere vertikalen Ausrichtung gehalten ist.

Der genannte Führungsschlitten kann beispielsweise mit einem Führungsfinger in eine langlochartige Ausnehmung an der Verteileinheit eingreifen. Umgekehrt wäre es aber auch möglich, wenn der genannte Führungsschlitten ein Langloch aufweist, in dem ein Vorsprung an der Verteileinheit gleiten kann.

Umfasst die Verteileinheit in der eingangs erwähnten Weise einen Verteilerkopf, in den von unten der ein Steigrohr führt, durch das das zu verteilende Gut von unten her in den Verteilerkopf geführt werden kann, ist es in vorteilhafter Weiterbildung der Erfindung möglich, den genannten Führungsschlitten an dem genannten Steigrohr anzulenken und/oder den Führungsschlitten längsverschieblich entlang der Längsachse des Steigrohrs an dem genannten Steigrohr bzw. einem damit verbundenen Zwischenstück verschieblich zu führen. Beispielsweise kann an dem Steigrohr eine vertikale Führungskontur vorgesehen sein, entlang der der Gelenkpunkt, der die genannten Führungsstangen miteinander verbindet und/oder der genannte Führungsschlitten längsverschieblich geführt sein kann.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Ansicht einer landwirtschaftlichen Ausbringmaschine schräg von hinten, die die Anordnung der Verteileinheit über den in abgesenkter Arbeitsstellung dargestellten Maschinenflügeln und die Lenkeranordnung zur Abstützung der Verteileinheit auf einer Säschiene der Ausbringmaschine zeigt,
- Fig. 2:: eine Heckansicht der landwirtschaftlichen Ausbringmaschine aus Fig. 1, die die Maschinenflügel in ihrer abgesenkten Arbeitsstellung und die symmetrische Anordnung der Lenker zum Abstützen der Verteileinheit auf der Säschiene zeigt,
- Fig. 3:: eine Heckansicht der Ausbringmaschine ähnlich Fig. 2, wobei die Maschinenflügelabschnitte mit einer daran angeordneten Packerradwalze gegenüber einer vorauslaufenden Kreiselegge höher angeordnet sind,
- Fig. 4:: eine Heckansicht der Ausbringmaschine aus den vorhergehenden Figuren, wobei die rechten und linken Maschinenflügel mit den daran angelenkten Packerradwalzen und Säschienenteilen in einer nach oben geklappten, aufrechten Transportstellung gezeigt sind, bevor die Maschinenflügelteile durch eine Zugeinrichtung aufeinander zubewegt sind,
- Fig. 5:: eine Heckansicht der Ausbringmaschine ähnlich Fig. 4, wobei die aufrechten Maschinenflügel ein Stück weit aufeinander zubewegt worden sind,
- Fig. 6:: eine Heckansicht der Ausbringmaschine ähnlich den Figuren 4 und 5, wobei die aufrechten Maschinenflügel vollständig aufeinander zubewegt sind,
- Fig. 7:: eine Draufsicht auf die Ausbringmaschine aus den vorhergehenden Figuren, wobei die Maschinenflügel in der aufrechten Transportstellung vor dem Aufeinanderzubewegen gezeigt sind,
- Fig. 8:: eine Draufsicht auf die Ausbringmaschine aus den vorhergehenden Figuren, wobei die aufrecht stehenden Maschinenflügel in einer teilweise zusammengeschobenen Stellung gezeigt sind, die der Darstellung der Figur 5 entspricht,

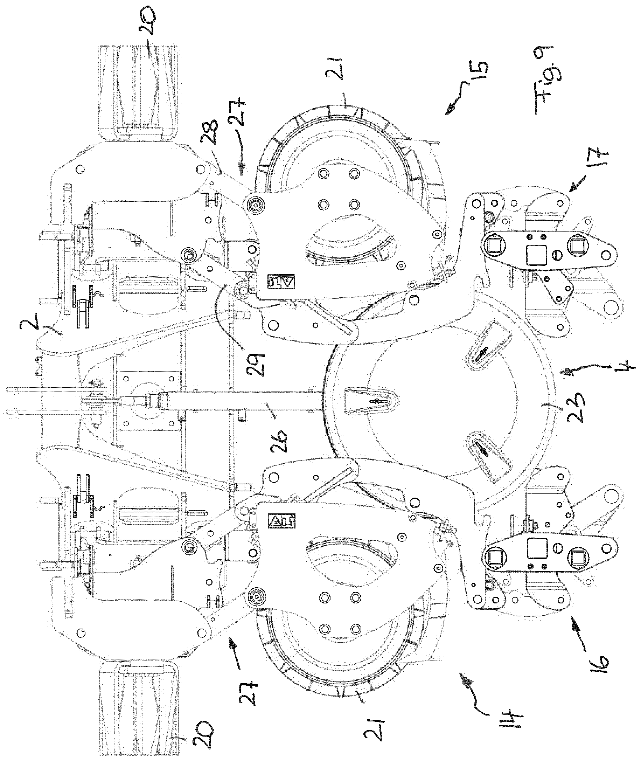

- Fig. 9:: eine Draufsicht auf die Arbeitsmaschine aus den vorhergehenden Figuren, wobei die aufrechten Maschinenflügel vollständig zusammengeschoben sind, wie dies auch in der Fig. 6 gezeigt ist,
- Fig. 10:: eine Seitenansicht der Ausbringmaschine aus den vorhergehenden Figuren, die die Lenkerverbindung zwischen Maschinenflügelabschnitten, insbesondere zwischen einer Packerradwalze und einer Kreiselegge zeigt, wobei die Maschinenflügel in ihrer abgesenkten Arbeitsstellung dargestellt sind und sich die Packerradwalze mit der damit verbundenen Säschiene in einer relativ tiefen Stellung relativ zur vorauslaufenden Kreiselegge gezeigt sind,
- Fig. 11:: eine Seitenansicht der Ausbringmaschine ähnlich Fig. 10, wobei die Packerradwalze und die damit verbundene Säschiene in einer relativ hohen Stellung relativ zur Kreiselegge gezeigt sind,
- Fig. 12:: eine Heckansicht der Verteileinheit und der Lenkeranordnung zum Abstützen der Verteileinheit an den Maschinenflügeln, wobei die Lenker in einer Stellung gezeigt sind, die der abgesenkten Arbeitsstellung der Maschinenflügel entspricht,
- Fig. 13:: eine Heckansicht der Verteileinheit und der diese abstützenden Lenker in einer weiter zusammengeschwenkten Stellung, die die Längsverschieblichkeit der Linearführung der Führungsstangen an der Linearführung zeigt,
- Fig. 14:: eine Heckansicht der Verteileinheit und der diese abstützenden Lenker ähnlich den Figuren 12 und 13, wobei die Lenker in einer zusammengeschobenen Stellung und der Führungsschlitten in einer nach oben verschobenen Stellung an dem Führungselement der Linearführung gezeigt sind,

- Fig. 15:: eine perspektivische Darstellung der Lenkeranordnung zum Abstützen der Verteileinheit schräg von hinten, und
- Fig. 16:: eine perspektivische Darstellung der Lenkeranordnung zum Abstützen der Verteileinheit schräg von vorne.

Wie die Figuren zeigen, kann die Ausbringmaschine als Anbaugerät ausgebildet sein, das über eine Anbauvorrichtung beispielsweise in Form einer Deichsel oder eines Anbaubocks an einen nicht gezeigten Schlepper angebaut werden kann.

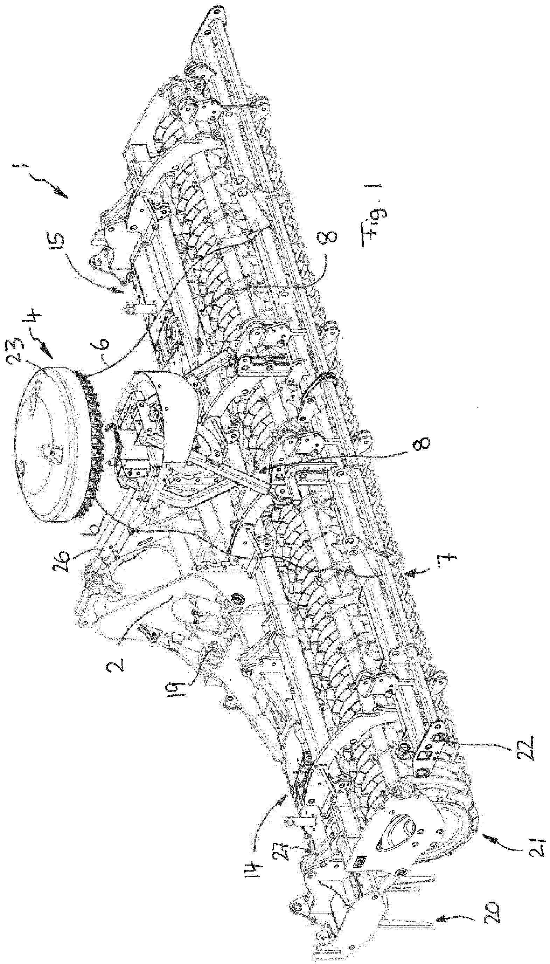

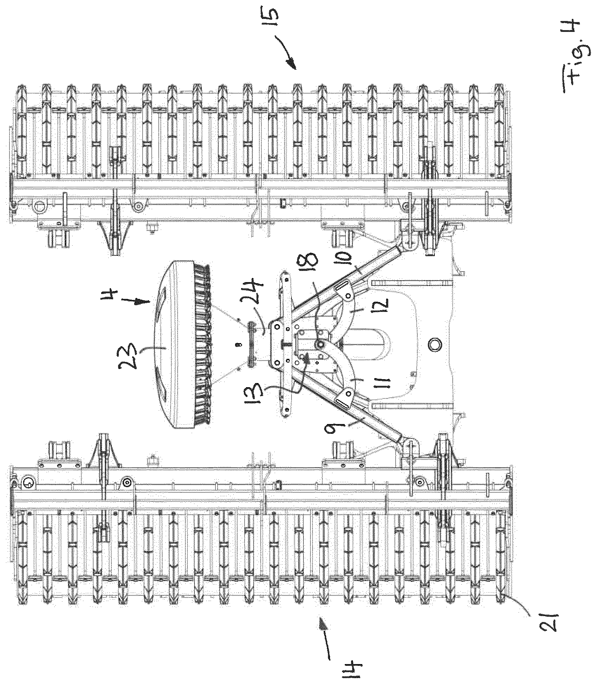

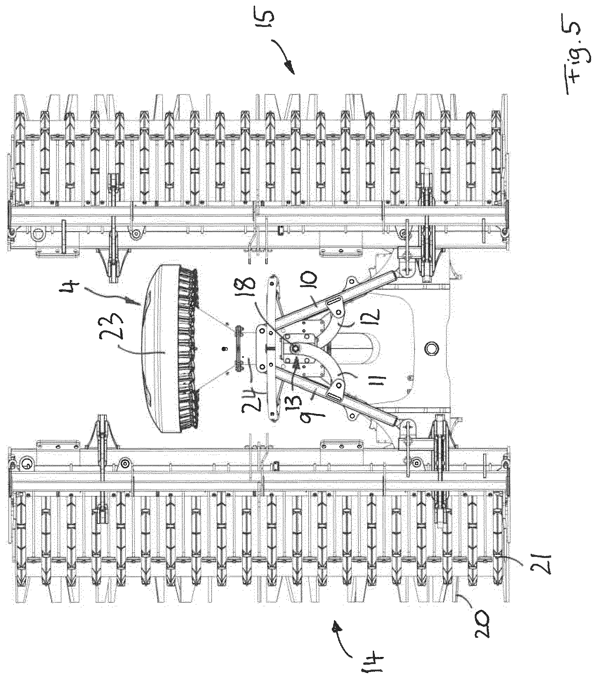

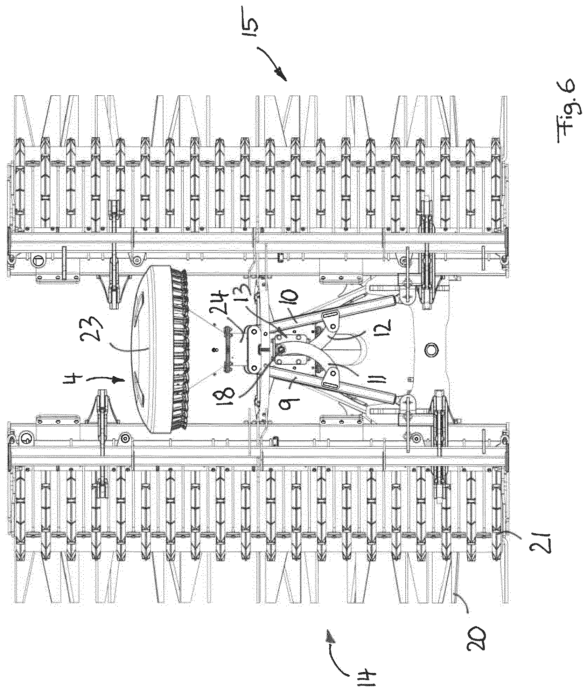

Die Ausbringmaschine 1 kann dabei einen Maschinenrahmen 2 umfassen, der rechte und linke Maschinenflügel 14 und 15 tragen kann, die an dem Maschinenrahmen 2 um liegende, in Fahrtrichtung weisende Klappachsen 19 auf- und abwippbar gelagert sein können, um aus der in Figur 1 gezeigten, abgesenkten Arbeitsstellung in eine ausgehobene Vorgewende- und/oder Transportstellung nach oben verschwenkt werden zu können, wie dies Figur 4 zeigt. In der abgesenkten Arbeitsstellung können sich die genannten Maschinenflügel 14 und 15 liegend erstrecken und rechts und links von dem Maschinenrahmen 2 auskragen. In der aufrechten Transportstellung, wie sie in Figur 4, 5 und 6 gezeigt ist, können sich die Maschinenflügel 14 und 15 aufrecht erstrecken.

Zum Ausheben der genannten Maschinenflügel 14 und 15 können nicht näher gezeigte Kraftheber beispielsweise in Form von Hydraulikzylindern vorgesehen sein.

Wie die Figuren zeigen, können die Maschinenflügel 14 und 15 verschiedene Bodenbearbeitungsaggregate aufweisen, die in der Arbeitsstellung hintereinander herlaufend angeordnet sein können. Beispielsweise können die genannten Bodenbearbeitungsaggregate eine vorauslaufende Kreiselegge 20, eine nachlaufende Packerradwalze 21 und eine wiederum der Packerradwalze 21 nachlaufend angeordnete Säschiene 22 umfassen. An der genannten Säschiene 21 können eine oder mehrere Reihen von Ausbringelementen 7 angeordnet sein, die beispielsweise Säschare und/oder Ablegerohre und/oder Körnervereinzelungselemente aufweisen können.

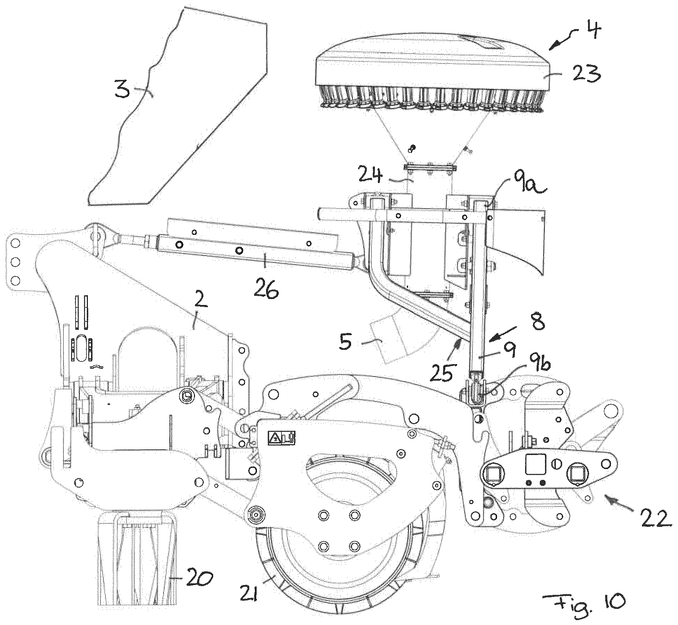

Aus einem nicht näher gezeigten, in der Figur 10 angedeuteten Tank 3 kann über eine Dosiereinrichtung und eine zentrale Zuführleitung 5 auszubringendes körniges Gut wie beispielsweise Saatkörner oder Düngermittel zu einer Verteileinheit 4 geführt werden, die einen Verteilerkopf 23 aufweisen kann, in den von unten her zentral ein Steigrohr 24 münden kann. Das genannte Steigrohr 24 kann mit der Zuführleitung 5 verbunden sein, um zu verteilende Körner von unten her in den Verteilerkopf 23 fördern zu können, beispielsweise auf pneumatische Weise.

Von dem Verteilerkopf 23 führen diverse Ausbringleitungen 6 zu den zuvor genannten Ausbringelementen 7, wobei die genannten Ausbringleitungen 6 über den Umfang verteilt von dem Verteilerkopf 23 abgehen können, vgl. Figur 1.

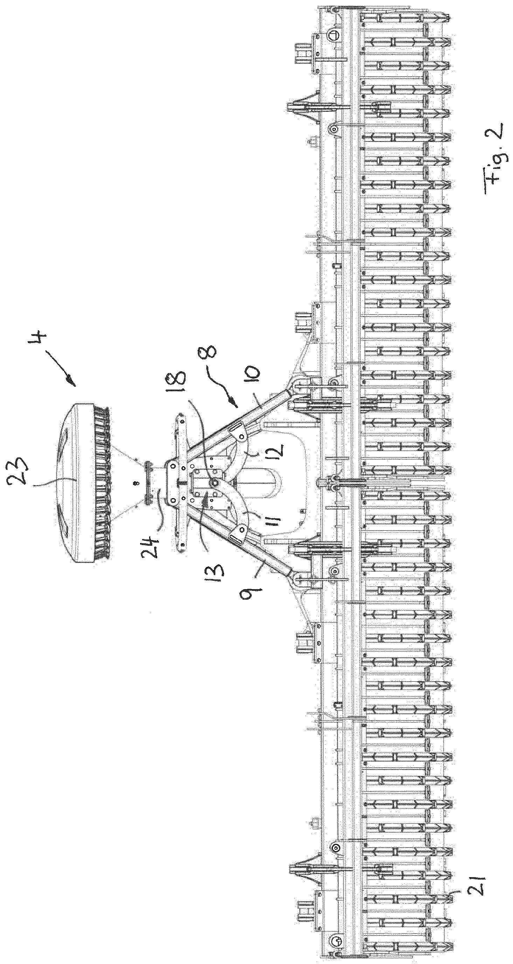

Die genannte Verteileinheit 4 einschließlich des Verteilkopfs 23 sitzt vorteilhafterweise mittig zentral über der genannten Ausbringschiene 22 und/oder der vorauslaufenden Packerradwalze 21, wobei die Verteileinheit 4 vertikal ausgerichtet in der Mitte zwischen den beiden Maschinenflügeln 14 und 15 angeordnet sein kann, vgl. Figuren 1 und 2.

Die Verteileinheit 4 ist dabei durch eine Lenkeranordnung 8 auf den Maschinenflügeln 14 und 15 abgestützt, wobei die Lenkeranordnung 8 vorteilhafterweise auf der Säschiene 22 bzw. den Ausbringschienenteilen 16 und 17 abgestützt sein kann, die mit den genannten rechten und linken Maschinenflügeln 14 und 15 verbunden sein können und mit diesen zusammen nach oben in die Transportstellung verschwenkt werden können.

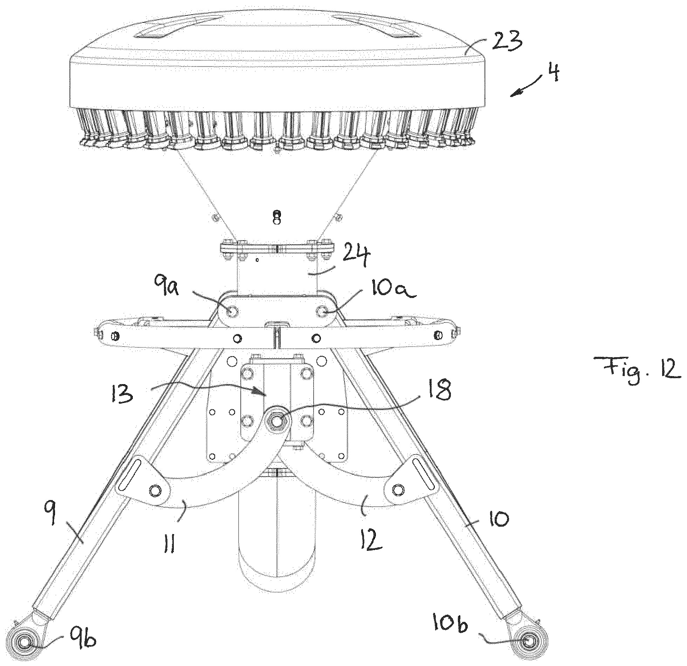

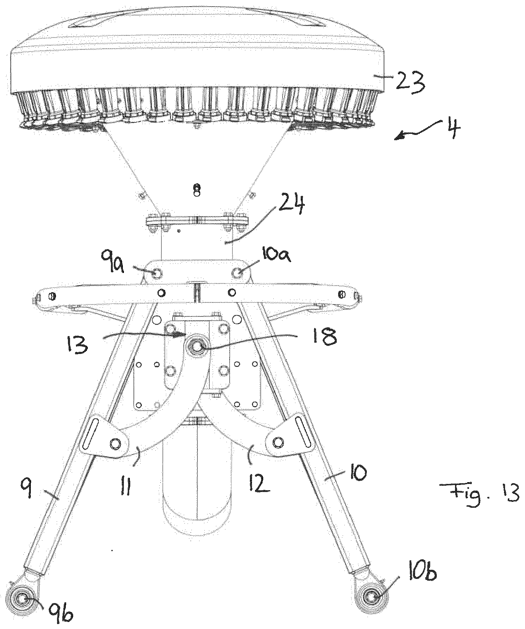

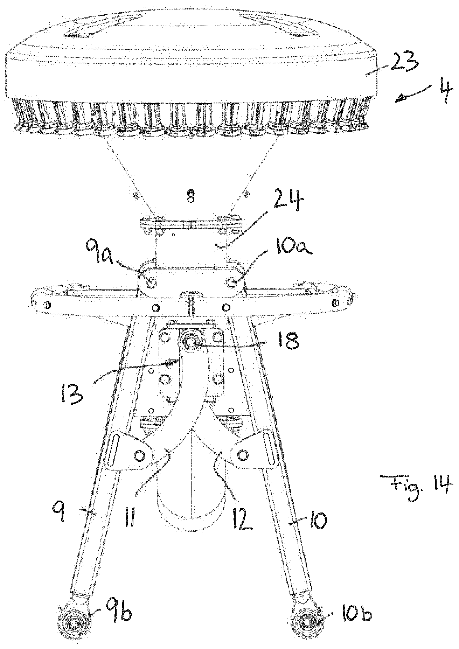

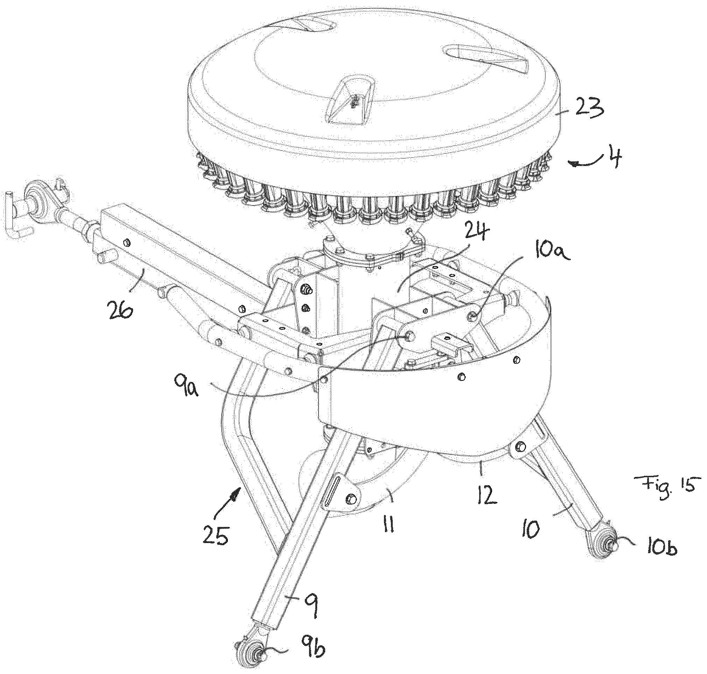

Wie die Figuren 12 bis 16 zeigen, kann die genannte Lenkeranordnung 8 zwei Lenker 9 und 10 umfassen, die sich zumindest näherungsweise symmetrisch zu einer vertikalen Längsmittelebene erstrecken, die mittig durch den Maschinenrahmen 2 verläuft und/oder mittig zu den beiden Maschinenflügeln 14 und 15 angeordnet ist.

Einer der Lenker 9 ist dabei mit einem Gelenk 9b gelenkig an einem linken Teil 16 der Sä- bzw. Ausbringschiene 22 angelenkt, während der andere Lenker 10 mit einem Gelenk 10b gelenkig am rechten Teil 17 der Sä- bzw. Ausbringschiene 22 angelenkt ist. Die beiden Gelenke 9b und 10b können näherungsweise koaxial bzw. in der Nähe der Klappachsen 19 angeordnet sein, um die die Maschinenflügel 14 und 15 nach oben geklappt werden können, wobei sich aufgrund der noch zu beschreibenden Höhenbeweglichkeit der Maschinenflügelabschnitte untereinander die Lage der genannten Gelenke 9b und 10b relativ zu den Klappachsen 19 verstellen kann.

Mit ihren oberen Endabschnitten sind die genannten Lenker 9 und 10 über Gelenke 9a und 10a an der Verteileinheit 4 gelenkig angelenkt, wobei sich die Gelenkachsen der Gelenke 9b und 10b zumindest näherungsweise parallel zueinander und/oder parallel zu den Gelenkachsen der unteren Gelenke 9b und 10b erstrecken können, und/oder zumindest näherungsweise parallel zu den Klappachsen 19 verlaufen können.

Wie Figur 12 zeigt, können die oberen Gelenke 9a und 10a im Bereich des Steigrohrs 24 und/oder an einem unteren Abschnitt des Verteilerkopfes 23 angeordnet sein.

Ein Abstand der oberen Gelenke 9a und 10a voneinander kann deutlich geringer sein als der Abstand der unteren Gelenke 9b und 10b, zumindest in der abgesenkten Arbeitsstellung der Maschinenflügel 14 und 15, in der die Lenker 9 und 10, die in Figur 12 gezeigte Stellung einnehmen. Werden die Maschinenflügel 14 und 15 um die Klappachsen 19 nach oben geklappt und in der aufrechten Transportstellung zusammengezogen bzw. noch näher zur Maschinenmitte verbracht, können die unteren Gelenke 9b und 10b der Lenker 9 und 10 näher zusammenfahren, wie dies ein Vergleich der Figuren 12, 13 und 14 zeigt. Hierdurch verkleinert sich der zwischen den Lenkern 9 und 10 eingeschlossene, grundsätzlich spitze Winkel.

Wie die Figuren 12 bis 14 zeigen, sind die Lenker 9 und 10 vorteilhafterweise symmetrisch bezüglich der zuvor genannten vertikalen Längsmittelebene angeordnet und satteldachförmig zueinander spitzwinklig geneigt angeordnet. Der Abstand der oberen Gelenke 9a und 10a voneinander kann näherungsweise in der Größenordnung des Steigrohrdurchmessers liegen, während der Abstand der unteren Gelenke 9b und 10b zumindest in der Arbeitsstellung ein Vielfaches hiervon betragen kann. Der zwischen den Lenkern 9 und 10 eingeschlossene Winkel kann im Bereich von 5° bis 60° oder 15° bis 45° oder 20° bis 40° betragen, vgl. Figuren 12 bis 14.

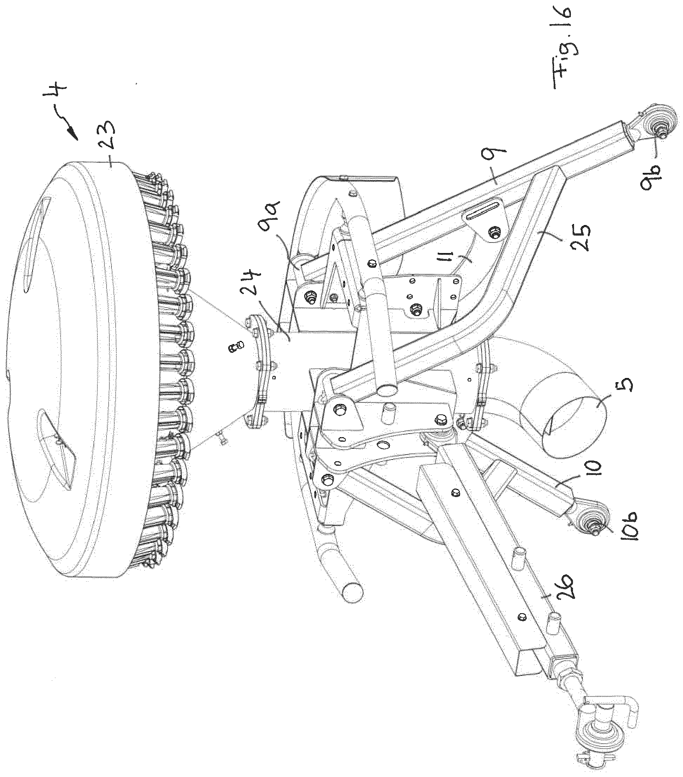

Um eine stabile Abstützung der Verteileinheit 4 zu erreichen, können die Lenker 9 und 10 mit einer Gabelung 25 versehen sein und das Steigrohr 24 bzw. die Verteileinheit 4 auf gegenüberliegenden Seiten abstützen bzw. an gegenüberliegenden Seiten daran angelenkt sein, vgl. Figur 16. Grundsätzlich wäre es auch möglich, zwei Paare von Lenkern 9 und 10 vorzusehen, die zueinander parallel angeordnet sein können und/oder untereinander durch Querstreben verbunden sein können, um eine solche stabile Abstützung zu erzielen.

Um bei nur zwei unteren Gelenken 9b und 10b der Lenkeranordnung 8, welche unteren Gelenke 9b und 10b auch noch in einer Querebene liegen können, eine trotzdem gegen nach vorne und hinten Kippen stabile Abstützung zu erzielen, kann die Verteileinheit 4 mittels eines weiteren Lenkers 26 in einer Richtung senkrecht bzw. quer zu der von den Lenkern 9 und 10 aufgespannten Ebene abgestützt sein, um nicht nach vorne oder hinten zu verkippen. Der genannte weitere Lenker 26 kann an einem Abschnitt des Maschinenrahmens 2 angelenkt sein und sich beispielsweise näherungsweise liegend nach vorne erstrecken, vgl. Figur 10. Der genannte Lenker 26 kann dabei gelenkig am Maschinenrahmen 2 und gelenkig am Steigrohr 24 oder einem anderen Abschnitt der Verteileinheit 4 gelenkig angelenkt sein.

Wie die Figuren 12 bis 14 zeigen, wird die Verteileinheit 4 beim Verbringen der Maschinenflügel 14 und 15 aus der Arbeitsstellung in die Transportstellung und umgekehrt durch eine Linearführung 13 stets in einer mittigen, vertikalen Stellung gehalten. Ein ungewolltes Verkippen der Verteileinheit 4 nach rechts oder links beim Verstellen der Maschinenflügel 14 und 15 wird durch die genannte Linearführung 13 verhindert.

Wie Figur 12 bis 14 zeigen, kann die genannte Linearführung 13 vorteilhafterweise zwei Führungsstangen 11 und 12 umfassen, die vorteilhafterweise symmetrisch zur vorgenannten vertikalen Längsmittelebene der Maschine angeordnet sein können. Eine der Führungsstangen 11 kann an einem der Lenker 9 und die andere Führungsstange 12 an dem anderen Lenker 10 gelenkig angelenkt sein, beispielsweise etwa in einem mittleren Drittel der genannten Lenker 9 und 10.

Mit ihren anderen Endabschnitten sind die genannten Führungsstangen 11 und 12 an einem Führungsschlitten 18 gelenkig angelenkt, wobei sich die Achsen der genannten Gelenke an den Führungsstangen 11 und 12 vorteilhafterweise parallel zu den Gelenkachsen der Gelenke 9a, 9b, 10a und 10b der Lenker 9 und 10 erstrecken. Insbesondere können die genannten Führungsstangen 11 und 12 mit ihren oberen Enden an einem gemeinsamen Gelenk miteinander verbunden sein, an welchem Gelenk der genannte Führungsschlitten 18 angebunden ist.

Der genannte Führungsschlitten 18 kann dabei von lediglich einem Bolzen gebildet sein, der in eine Längsnut an der Verteileinheit 4, beispielsweise an dem Steigrohr 24 eingreift, vgl. Figur 12. Grundsätzlich könnte die Anordnung aber auch umgedreht werden und der Führungsschlitten 18 eine beispielsweise U-förmige Längsnut aufweisen, die eine Führungsschiene an dem Steigrohr 24 umgreift.

Die Linearführung 13 ist vorteilhafterweise derart ausgebildet, dass die genannten Führungsstangen 11 und 12 vertikal und/oder parallel zur Längsachse des Steigrohrs 24 relativ zur Verteileinheit 4 verfahrbar ist, wie dies ein Vergleich der Figuren 12, 13 und 14 zeigt. Durch diese lineare Verfahrbarkeit der Führungsstangen 11 und 12, insbesondere von deren oberen Verbindungsgelenk, können die Lenker 9 und 10 sich in ihrem Spreizwinkel verändern, wobei gleichzeitig die Verteileinheit 4 in einer vertikalen Ausrichtung gehalten wird.

Die genannte Veränderung des Spreizwinkels der Lenker 9 und 10 kommt insbesondere dann zustande, wenn die in der Transportstellung aufrechten Maschinenflügel 14 und 15 noch näher aufeinander zubewegt werden, was durch die höhenbewegliche Anbindung der Säschiene 22 gegenüber der vorauslaufenden Kreiselegge 20 möglich ist.

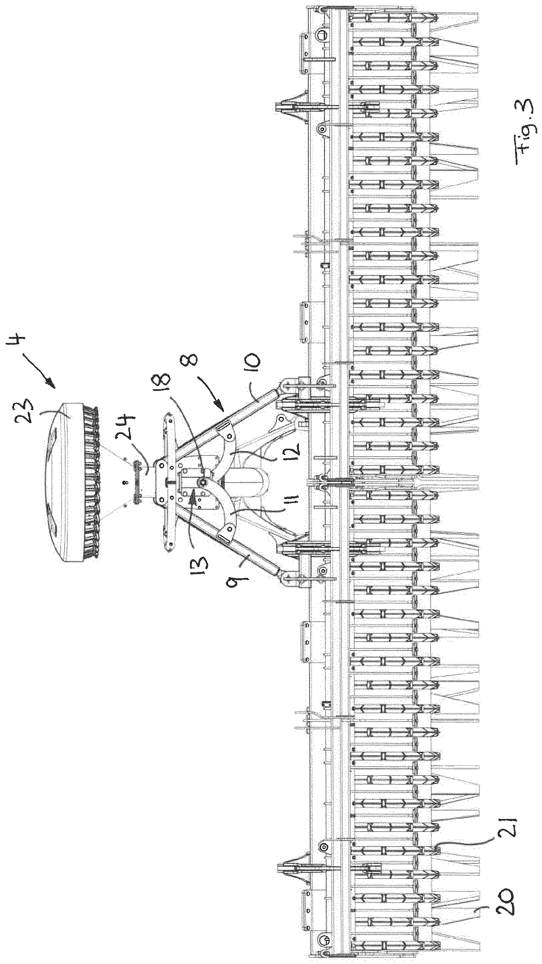

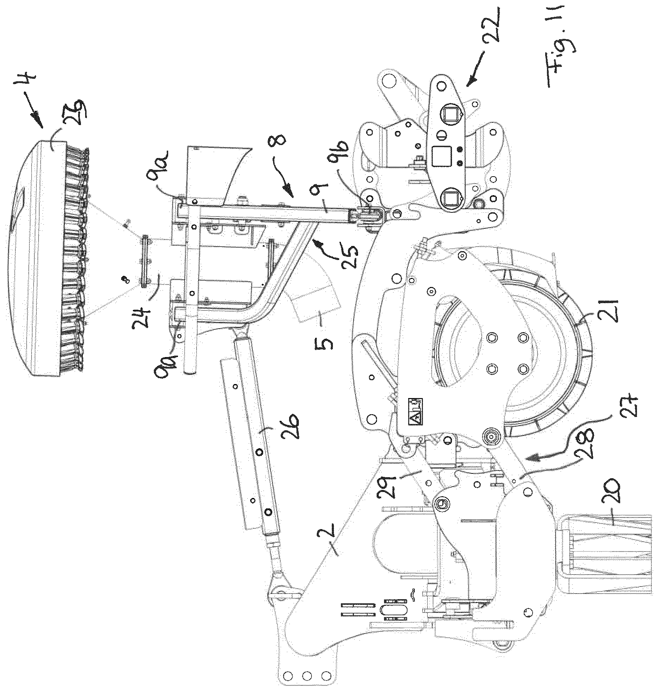

Wie ein Vergleich der Figuren 2 und 3 sowie ein Vergleich der Figuren 10 und 11 zeigt, sind in der abgesenkten Arbeitsstellung hintereinander herlaufende Abschnitte der Maschinenflügel 14 und 15 zueinander höhenbeweglich, beispielsweise ein die Packerwalze 21 tragender Maschinenflügelteil relativ zu dem vorauslaufenden, die Kreiselegge 20 tragenden Maschinenflügelteil. Ist die Säschiene 22 an dem höhenbeweglichen Maschinenflügelteil angebunden, welche die höhenbewegliche Packerwalze 21 trägt, ist auch die Säschiene 22 in entsprechender Weise höhenbeweglich, vgl. vergleichend die Figuren 10 und 11.

Die genannte Höhenbeweglichkeit kann durch eine Lenkeranordnung 27 erreicht werden, beispielsweise in Form einer Parallelogramm-Lenkerführung zwischen den beiden genannten Maschinenflügelteilen. Die genannte Lenkeranordnung 27 kann näherungsweise parallel oder auch schräg zueinander angeordnete Lenker 28 und 29 aufweisen, die einerseits an dem vorauslaufenden Maschinenflügelteil und andererseits an dem nachlaufenden Maschinenflügelteil jeweils gelenkig angelenkt sind und sich in einer Mittelstellung näherungsweise liegend erstrecken können. Die Gelenkachsen können dabei quer zur Fahrtrichtung liegend ausgerichtet sein, um relative Höhenbewegungen zuzulassen, wie sie die Figuren 10 und 11 zeigen.

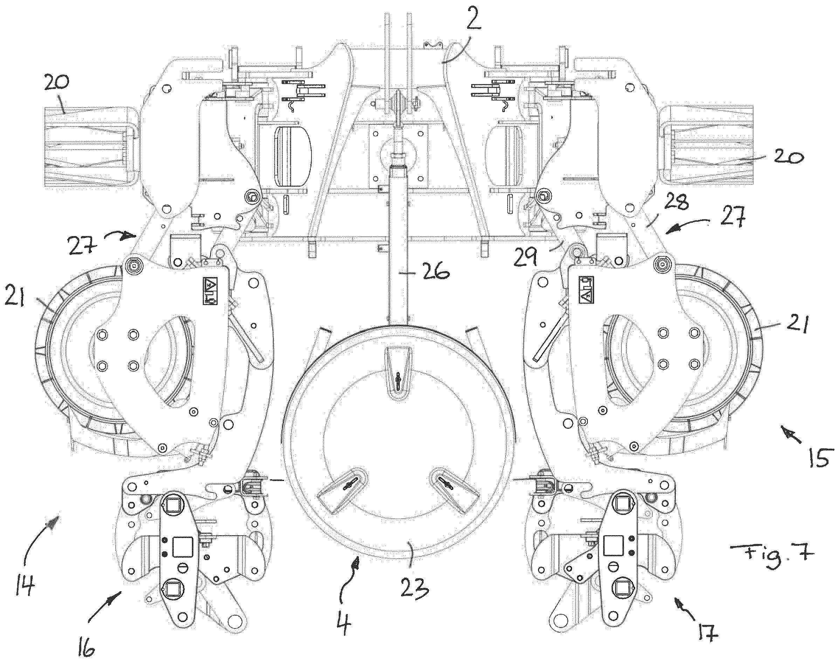

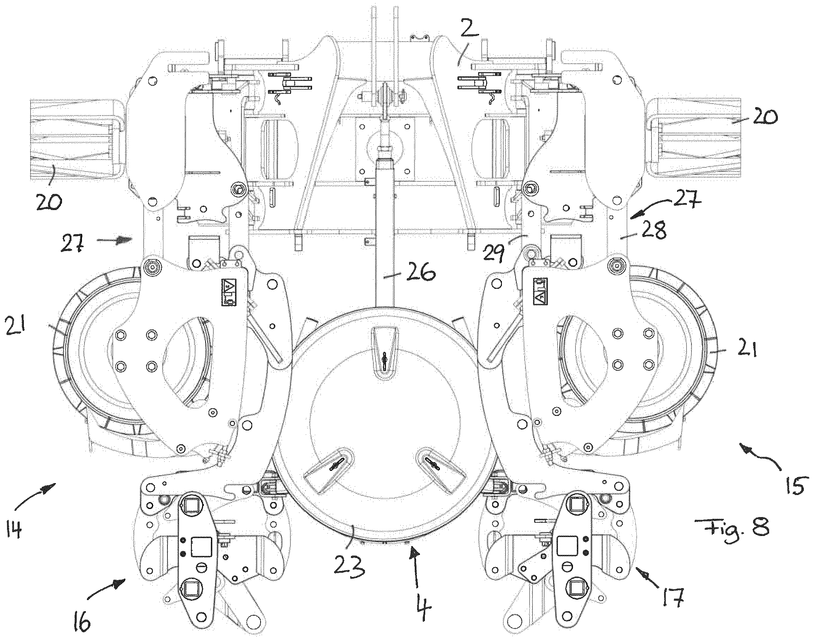

Werden die Maschinenflügel 14 und 15 in die aufrechte Transportstellung nach oben verschwenkt, kann die Lenkeranordnung 27 dazu genutzt werden, die in der Transportstellung aufrecht stehenden Maschinenflügel 14 und 15 noch näher aufeinander zu und damit näher zur Maschinenmitte zu bewegen, wie dies ein Vergleich der Figuren 4, 5 und 6 verdeutlicht. Ebenfalls zeigt dies ein Vergleich der Figuren 7 und 8. Durch dieses Zusammenfahren der aufrecht stehenden Maschinenflügel 14 und 15 kommen diese noch näher an den Verteilerkopf 23 der Verteileinheit 4, wobei sich beim Zusammenfahren der aufrecht stehenden Maschinenflügel 14 und 15 auch die unteren Gelenke 9b und 10b der Lenker 9 und 10 aufeinander zubewegen und sich dementsprechend die Geometrie der Lenkeranordnung 8 verändert.

Durch die Linearführung 13 wird dabei die Verteileinheit 4 trotzdem stets in einer aufrechten Stellung gehalten, vgl. Figur 4, 5 und 6.

## Patentansprüche

1. Landwirtschaftliche Ausbringmaschine mit einem Tank (3) zum Speichern körnigen Guts wie Saatgut oder Dünger, sowie einer Verteileinheit (4), die über eine Zuführleitung (5) mit dem Tank (3) verbunden sowie über Ausbringleitungen (6) mit mehreren Ausbringelementen (7) verbunden ist, wobei die Verteileinheit (4) durch eine Lenkeranordnung (8) an klappbaren Maschinenflügeln (14, 15), die zwischen einer abgesenkten Arbeitsstellung und einer ausgehobenen Vorgewende- und/oder Transportstellung klappbar gelagert sind, abgestützt ist, **dadurch gekennzeichnet, dass** die Lenkeranordnung (8) zwei Lenker (9, 10) umfasst, die jeweils einerseits gelenkig an der Verteileinheit (4) und andererseits gelenkig an einem der Maschinenflügel (14, 15) angelenkt sind, wobei die Verteileinheit (4) durch eine Linearführung (13) beim Verstellen der Maschinenflügel (14, 15) zwischen den Arbeits- und Transportstellungen geführt und sowohl in Arbeits- als auch Transportstellung aufrecht und mittig zwischen den Maschinenflügeln (14, 15) gehalten ist.

2. Landwirtschaftliche Ausbringmaschine nach dem vorhergehenden Anspruch, wobei die genannten Lenker (9, 10) maschinenflügelseitig jeweils an einem Ausbringschienenteil (16, 17) angelenkt sind, der einen Teil eines jeweiligen Maschinenflügels (14, 15) bildet und/oder zusammen mit einem Maschinenflügel (14, 15) zwischen der abgesenkten Transportstellung und der ausgehobenen Vorgewende- und/oder Transportstellung schwenkbar gelagert ist.

3. Landwirtschaftliche Ausbringmaschine nach einem der beiden vorhergehenden Ansprüche, wobei die beiden Lenker (9, 10) bezüglich einer vertikalen Längsmittelebene, die mittig zwischen den beiden Maschinenflügeln (14, 15) verläuft, symmetrisch angeordnet sind und zumindest in der abgesenkten Arbeitsstellung und/oder der ausgehobenen Transportstellung der Maschinenflügel (14, 15) eine zueinander spitzwinklig geneigte Lenkerstellung einnehmen.

4. Landwirtschaftliche Ausbringmaschine nach einem der beiden vorhergehenden Ansprüche, wobei die maschinenflügelseitigen Gelenke (9b; 10b) der beiden Lenker (9, 10) in der abgesenkten Arbeitsstellung der Maschinenflügel (14, 15) einen Abstand voneinander besitzen, der mehr als 150% oder mehr als 200% des Abstands der genannten Gelenke (9b; 10b) der Lenker (9, 10) in der ausgehobenen Transportstellung der Maschinenflügel (14, 15) beträgt, und/oder die maschinenflügelseitigen Gelenke (9b, 10b) der beiden Lenker (9, 10) in der abgesenkten Arbeitsstellung der Maschinenflügel (14, 15) einen Abstand voneinander besitzen, der mehr als 150% oder mehr als 200% des Abstands der verteileinheitseitigen Gelenke (9a; 10a) der Lenker (9, 10) beträgt.

5. Landwirtschaftliche Ausbringmaschine nach einem der vorhergehenden Ansprüche, wobei die Linearführung (13) zwei Führungsstangen (11, 12) umfasst, die einerseits gelenkig an den Lenkern (9, 10) der Lenkeranordnung (8) angelenkt sind und andererseits gelenkig an einem Führungsschlitten (18) angelenkt sind, der längsverschieblich an der Verteileinheit (4) geführt ist, wobei der Führungsschlitten (18) insbesondere parallel zur Längsachse eines Steigrohrs (24) verschieblich geführt ist, welches Steigrohr (24) von unten her in einen Verteilkopf (23) der Verteileinheit (4) führt.

6. Landwirtschaftliche Ausbringmaschine nach dem vorhergehenden Anspruch, wobei die Führungsstangen (11, 12) derartig ausgebildet und angeordnet sind, dass eine Veränderung des Spreizwinkels zwischen den Lenkern (9, 10) der Lenkeranordnung (8) in eine vertikale Bewegung des Führungsschlittens (18) umgesetzt wird.

7. Landwirtschaftliche Ausbringmaschine nach einem der beiden vorhergehenden Ansprüche, wobei die beiden Führungsstangen (11, 12) in einem mittleren Drittel der Lenker (9, 10) an den genannten Lenkern (9, 10) gelenkig angelenkt sind und der Führungsschlitten (18) zwischen oberen Endabschnitten der Lenker (9, 10) und/oder unterhalb oberer Gelenke (9a, 10a) der Lenker (9, 10) längsverschieblich gelagert ist.

8. Landwirtschaftliche Ausbringmaschine nach einem der vorhergehenden Ansprüche, wobei die Lenker (9, 10) der Lenkeranordnung (8) eine Gabelung (25) aufweisen und mit zwei Gelenkpaaren die Verteileinheit (4) an vier obenliegenden Gelenkpunkten abstützen.

9. Landwirtschaftliche Ausbringmaschine nach einem der vorhergehenden Ansprüche, wobei die Lenkeranordnung (8) mittels nur zwei Gelenken (9b, 10b) an den Maschinenflügeln (14, 15) abgestützt ist, welche Gelenke (9b, 10b) in einer Ebene quer zur Fahrtrichtung angeordnet sind.

10. Landwirtschaftliche Ausbringmaschine nach einem der vorhergehenden Ansprüche, wobei die Lenkeranordnung (8) einen Längslenker (26) aufweist, der die Verteileinheit (4) gegen Verkippen in Fahrtrichtung abstützt und einerseits gelenkig an der Verteileinheit (4) und andererseits gelenkig an einem Maschinenrahmen (2) angelenkt ist, wobei sich der genannte Längslenker (26) vorzugsweise liegend ausgerichtet und/oder näherungsweise senkrecht zur von den Lenkern (9, 10) aufgespannten Ebene erstreckt.

11. Landwirtschaftliche Ausbringmaschine nach einem der vorhergehenden Ansprüche, wobei die Maschinenflügel (14, 15) jeweils zumindest zwei Maschinenflügelabschnitte umfassen, die in der abgesenkten Arbeitsstellung relativ zueinander höhenbeweglich sind.

12. Landwirtschaftliche Ausbringmaschine nach dem vorhergehenden Anspruch, wobei zwischen den höhenbeweglichen Maschinenflügelabschnitten eine Lenkeranordnung (27), insbesondere zwei eine Parallelogramm-Lenkerführung bildende Lenker (28, 29) zur höhenbeweglichen Verbindung der beiden Maschinenflügelabschnitte vorgesehen ist.

13. Landwirtschaftliche Ausbringmaschine nach einem der beiden vorhergehenden Ansprüche, wobei die Maschinenflügel (14, 15) in ihrer aufrecht stehenden Transportstellung querbewegliche, aufeinander zufahrbare Maschinenflügelabschnitte besitzen, an denen die Verteileinheit (4) durch die Lenkeranordnung (8) abgestützt ist.

14. Landwirtschaftliche Ausbringmaschine nach einem der vorhergehenden Ansprüche, wobei die Lenkeranordnung (8) zum Abstützen der Verteileinheit (4) auf den Maschinenflügeln (14, 15) derart beweglich ausgebildet ist, dass die Anlenkpunkte der Lenkeranordnung (8) an den Maschinenflügeln (14, 15) in ihrem Abstand voneinander veränderbar sind.

## Claims

1. Agricultural spreading machine with a tank (3) for storing granular material such as seeds or fertiliser, and a distribution unit (4), which is connected by way of a supply line (5) to the tank (3) and connected by way of spreading lines (6) to a number of spreading elements (7), wherein the distribution unit (4) is supported by a connecting rod arrangement (8) on folding machine wings (14, 15), which are mounted foldably between a lowered working position and a raised headland and/or transport position, **characterised in that** the connecting rod arrangement (8) comprises two connecting rods (9, 10), which are each coupled articulatedly on the one hand to the distribution unit (4) and articulatedly on the other hand to one of the machine wings (14, 15), wherein the distribution unit (4) is guided by a linear guide (13) when adjusting the machine wings (14, 15) between the working and transport positions and is held upright and centrally between the machine wings (14, 15) both in the working and transport positions.

2. Agricultural spreading machine according to the preceding claim, wherein said connecting rods (9, 10) are coupled on the machine wing side respectively to a spreading rail part (16, 17), which forms part of a respective machine wing (14, 15) and/or is supported pivotably together with a machine wing (14, 15) between the lowered transport position and the raised headland and/or transport position.

3. Agricultural spreading machine according to one of the two preceding claims, wherein the two connecting rods (9, 10) are arranged symmetrically with respect to a vertical longitudinal median plane, which runs centrally between the two machine wings (14, 15), and assume a link position inclined at an acute angle to one another at least in the lowered working position and/or the raised transport position of the machine wings (14, 15).

4. Agricultural spreading machine according to one of the two preceding claims, wherein the joints (9b; 10b) of the two connecting rods (9, 10) on the machine wing side have a spacing from one another in the lowered working position of the machine wings (14, 15) that is more than 150% or more than 200% of the spacing of said joints (9b; 10b) of the connecting rods (9, 10) in the raised transport position of the machine wings (14, 15), and/or the joints (9b; 10b) of the two connecting rods (9, 10) on the machine wing side have a spacing from one another in the lowered working position of the machine wings (14, 15) that is more than 150% or more than 200% of the spacing of the joints (9a; 10a) of the connecting rods (9, 10) on the distribution unit side.

5. Agricultural spreading machine according to any one of the preceding claims, wherein the linear guide (13) comprises two guide rods (11, 12), which are coupled on the one hand articulatedly to the connecting rods (9, 10) of the connecting rod arrangement (8) and on the other hand coupled articulatedly to a guide carriage (18), which is guided longitudinally movably on the distribution unit (4), wherein the guide carriage (18) is guided movably in particular parallel to the longitudinal axis of a riser pipe (24), which riser pipe (24) leads from below into a distribution head (23) of the distribution unit (4).

6. Agricultural spreading machine according to the preceding claim, wherein the guide rods (11, 12) are designed and arranged in such a way that a change of the spreading angle between the connecting rods (9, 10) of the connecting rod arrangement (8) is converted into a vertical movement of the guide carriage (18).

7. Agricultural spreading machine according to one of the two preceding claims, wherein the two guide rods (11, 12) are coupled articulatedly to said connecting rods (9, 10) in a middle third of the connecting rods (9, 10) and the guide carriage (18) is supported longitudinally movably between upper end sections of the connecting rods (9, 10) and/or below top joints (9a, 10a) of the connecting rods (9, 10).

8. Agricultural spreading machine according to any one of the preceding claims, wherein the connecting rods (9, 10) of the connecting rod arrangement (8) have a forking (25) and support the distribution unit (4) with two joint pairs on four upper articulation points.

9. Agricultural spreading machine according to any one of the preceding claims, wherein the connecting rod arrangement (8) is supported on the machine wings (14, 15) by means of only two joints (9b, 10b), which joints (9b, 10b) are arranged in a plane transverse to the direction of travel.

10. Agricultural spreading machine according to any one of the preceding claims, wherein the connecting rod arrangement (8) has a longitudinal connecting rod (26), which supports the distribution unit (4) against tilting in the direction of travel and is coupled on the one hand articulatedly to the distribution unit (4) and on the other hand articulatedly to a machine frame (2), wherein said longitudinal connecting rod (26) extends preferably oriented horizontally and/or approximately perpendicular to the plane stretched by the connecting rods (9, 10).

11. Agricultural spreading machine according to any one of the preceding claims, wherein the machine wings (14, 15) each comprise at least two machine wing sections, which are height-adjustable relative to one another in the lowered working position.

12. Agricultural spreading machine according to the preceding claim, wherein provided between the height-adjustable machine wing sections is a connecting rod arrangement (27), in particular two connecting rods (28, 29) forming a parallelogram connecting rod guide for the height-adjustable connection of the two machine wing sections.

13. Agricultural spreading machine according to one of the two preceding claims, wherein the machine wings (14, 15) in their upright transport position have transversely movable machine wing sections that can be moved towards one another, on which the distribution unit (4) is supported by the connecting rod arrangement (8).

14. Agricultural spreading machine according to any one of the preceding claims, wherein the connecting rod arrangement (8) is designed movably to support the distribution unit (4) on the machine wings (14, 15) in such a way that the coupling points of the connecting rod arrangement (8) to the machine wings (14, 15) are variable in their spacing from one another.

## Revendications

1. Machine d'épandage agricole avec un réservoir (3) destiné à stocker des produits en grains, comme des semences ou des engrais, ainsi qu'avec une unité de distribution (4), qui est reliée au réservoir (3) par l'intermédiaire d'un conduit d'amenée (5) et qui est reliée à plusieurs éléments d'épandage (7) par l'intermédiaire de conduits d'épandage (6), dans laquelle l'unité de distribution (4) est soutenue par un ensemble de bras oscillants (8) sur des herses de machine (14, 15) repliables, qui sont montées de manière à pouvoir être repliées entre une position de travail abaissée et une position de tournière et/ou de transport relevée, **caractérisée en ce que** l'ensemble de bras oscillants (8) comprend deux bras oscillants (9, 10), qui sont articulés respectivement d'un côté de manière articulée sur l'unité de distribution (4) et d'autre part de manière articulée sur une des herses de machine (14, 15), dans laquelle l'unité de distribution (4) est guidée entre les positions de travail et de transport lors de l'ajustement des herses de machine (14, 15) par un guidage linéaire (13) et est maintenue, à la fois dans la position de travail et dans la position de travail également, de manière verticale et de manière centrée entre les herses de machine (14, 15).

2. Machine d'épandage agricole selon la revendication précédente, dans laquelle lesdits bras oscillants (9, 10) sont articulés du côté des herses de machine respectivement sur une partie de rail d'épandage (16, 17), qui forme une partie d'une herse de machine (14, 15) respective et/ou qui est montée de manière à pouvoir pivoter entre la position de transport abaissée et la position de tournière et/ou de transport relevée conjointement avec une herse de machine (14, 15).

3. Machine d'épandage agricole selon l'une quelconque des deux revendications précédentes, dans laquelle les deux bras oscillants (9, 10) sont disposés de manière symétrique par rapport à un plan médian longitudinal vertical, qui s'étend de manière centrée entre les deux herses de machine (14, 15) et adoptent une position de bras oscillant inclinée à angle aigu au moins dans la position de travail abaissée et/ou dans la position de transport relevée des herses de machines (14, 15).

4. Machine d'épandage agricole selon l'une quelconque des revendications précédentes, dans laquelle les articulations (9b ; 10b) côté herse de machine des deux bras oscillants (9, 10) possèdent, dans la position de travail abaissée des herses de machine (14, 15), une distance les unes des autres, qui est supérieure à 150 % ou supérieure à 200 % de la distance entre lesdites articulations (9b ; 10b) des bras oscillants (9, 10) dans la position de transport relevée des herses de machine (14, 15), et/ou les articulations (9b, 10b) côté herse de machine des deux bras oscillants (9, 10) possèdent dans la position de travail abaissée des herses de machine (14, 15) une distance les unes des autres, qui est supérieure à 150 % ou est supérieure à 200 % de la distance entre les articulations (9a ; 10a) côté unité de distribution des bras oscillants (9, 10).

5. Machine d'épandage agricole selon l'une quelconque des revendications précédentes, dans laquelle le guidage linéaire (13) comprend deux tiges de guidage (11, 12), qui sont articulées d'un côté de manière articulée sur les bras oscillants (9, 10) de l'ensemble de bras oscillants (8) et sont articulées d'autre part de manière articulée sur un chariot de guidage (18), qui est guidé de manière à pouvoir coulisser longitudinalement sur l'unité de distribution (4), dans laquelle le chariot de guidage (18) est guidé de manière à pouvoir coulisser en particulier de manière parallèle par rapport à l'axe longitudinal d'un tube ascendant (24), lequel tube ascendant (24) mène depuis le bas dans une tête de distribution (23) de l'unité de distribution (4).

6. Machine d'épandage agricole selon la revendication précédente, dans laquelle les tiges de guidage (11, 12) sont réalisées et sont disposées de telle manière qu'une modification de l'angle d'écartement entre les bras oscillants (9, 10) de l'ensemble de bras oscillants (8) est convertie en un déplacement vertical du chariot de guidage (18).

7. Machine d'épandage agricole selon l'une quelconque des deux revendications précédentes, dans laquelle les deux tiges de guidage (11, 12) sont articulées de manière articulée sur lesdits bras oscillants (9, 10) dans un tiers central des bras oscillants (9, 10) et le chariot de guidage (18) est monté de manière à pouvoir coulisser longitudinalement entre des sections d'extrémité supérieures des bras oscillants (9, 10) et/ou sous des articulations (9a, 10a) supérieures des bras oscillants (9, 10).

8. Machine d'épandage agricole selon l'une quelconque des revendications précédentes, dans laquelle les bras oscillants (9, 10) de l'ensemble de bras oscillants (8) présentent une bifurcation (25) et soutiennent l'unité de distribution (4) sur quatre points d'articulation situés en haut avec deux paires d' articu lations.

9. Machine d'épandage agricole selon l'une quelconque des revendications précédentes, dans laquelle l'ensemble de bras oscillants (8) est soutenu sur les herses de machine (14, 15) au moyen de seulement deux articulations (9b, 10b), lesquelles articulations (9b, 10b) sont disposées dans un plan de manière transversale par rapport à la direction de déplacement.

10. Machine d'épandage agricole selon l'une quelconque des revendications précédentes, dans laquelle l'ensemble de bras oscillants (8) présente un bras oscillant longitudinal (26), qui soutient l'unité de distribution (4) pour empêcher tout basculement dans la direction de déplacement et est articulé d'une part de manière articulée sur l'unité de distribution (4) et d'autre part de manière articulée sur un châssis de machine (2), dans laquelle ledit bras oscillant longitudinal (26) s'oriente de préférence à l'horizontale et/ou s'étend approximativement de manière perpendiculaire par rapport au plan formé par les bras oscillants (9, 10).

11. Machine d'épandage agricole selon l'une quelconque des revendications précédentes, dans laquelle les herses de machine (14, 15) comprennent respectivement au moins deux sections de herse de machine, qui sont mobiles en hauteur l'une par rapport à l'autre dans la position de travail abaissée.

12. Machine d'épandage agricole selon la revendication précédente, dans laquelle un ensemble de bras oscillants (27), en particulier deux bras oscillants (28, 29) formant un guidage de bras oscillant en parallélogramme, destiné à relier de manière mobile en hauteur les deux sections de herse de machine est prévu entre les sections de herse de machine mobiles en hauteur.

13. Machine d'épandage agricole selon l'une quelconque des revendications précédentes, dans laquelle les herses de machine (14, 15) possèdent, dans leur position de transport située à la verticale, des sections de herse de machine mobiles transversalement, pouvant être rapprochées les unes par rapport aux autres, sur lesquelles l'unité de distribution (4) est soutenue par l'ensemble de bras oscillants (8).

14. Machine d'épandage agricole selon l'une quelconque des revendications précédentes, dans laquelle l'ensemble de bras oscillants (8) est réalisé de manière mobile pour soutenir l'unité de distribution (4) sur les herses de machine (14, 15) de telle manière que les points d'articulation de l'ensemble de bras oscillants (8) peuvent être modifiés dans leur distance sur les herses de machine (14, 15).
